# EUROPEAN PATENT SPECIFICATION

(11) **EP 1 623 887 B1**
(45) Date of publication and mention of the grant of the patent: **30.11.2011**
(21) Application number: 05016763.4
(22) Date of filing: 02.08.2005
(51) Int. Cl.: B60R 21/20

(54) **Passenger protecting device**
Insassen-Schutzeinrichtung
Dispositif de protection des occupants

(30) Priority: 04.08.2004 JP 2004228241; 11.05.2005 JP 2005138697
(43) Date of publication of application: 08.02.2006
(73) Proprietor: TAKATA CORPORATION, Minato-ku, Tokyo 106-8510 (JP)
(72) Inventor: Yoshikawa, Hiromichi, Minato-ku Tokyo 106-8510 (JP); Sakai, Katsuyuki, Minato-ku Tokyo 106-8510 (JP); Itoga, Yasuo, Minato-ku Tokyo 106-8510 (JP)
(74) Representative: Banzer, Hans-Jörg

(56) References cited:
- EP-A- 1 520 753
- EP-A1- 1 369 315
- EP-A1- 1 459 942

## Description

The present invention relates to a passenger protecting device for protecting a passenger in a seat in a vehicle such as an automobile in the event of a collision, and particularly relates to a passenger protecting device having a configuration for restraining the waist of the passenger in a frontal collision so as to prevent forward and backward movement of the body of the passenger.

As a system for protecting the passenger in an automobile in a collision, more specifically, as a passenger protecting device for preventing the submarine phenomenon, which is a phenomenon wherein the passenger who wears a seat belt passes under a lap belt in a frontal collision, a passenger protecting device is disclosed in Japanese Unexamined Patent Application Publication No. 10-217818, wherein an inflatable bag is disposed between a seat cushion and a seat pan, and is inflated so as to push up the front portion of the seat cushion in a collision of the vehicle.

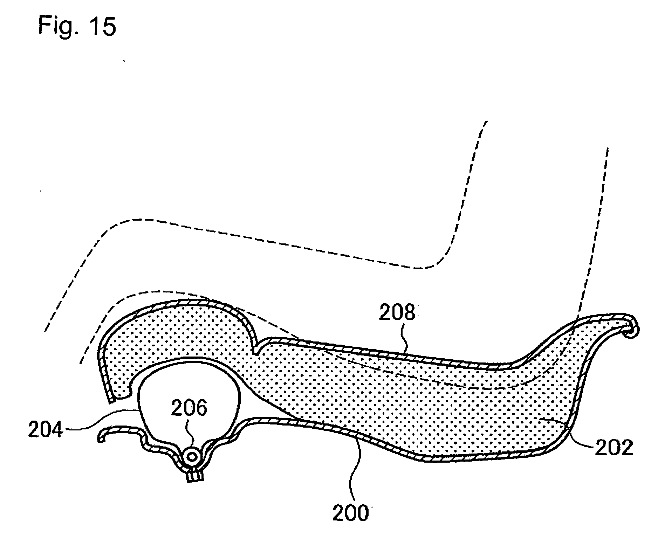

Fig. 15 is a longitudinal cross-sectional view which shows a passenger protecting device along the longitudinal direction of a seat. An airbag 204 is disposed between a cushion frame (seat pan) 200 and a seat pad (seat cushion) 202 at the front portion of the seat. The airbag 204 extends in the width direction of the seat, and can be inflated by action of an inflator 206 (gas bag). The upper face of the seat pad 202 is covered with a trim cover 208, on which the passenger sits.

In the event that the inflator 206 operates in a collision of the vehicle, the airbag 204 is inflated so as to push up the front portion of the seat pad 202, or so as to reduce the flexibility thereof due to the pressure of the airbag 204 underneath the seat pad 202, thereby preventing forward movement of the body of the passenger, as well as restraining the passenger.

The passenger protecting device disclosed in the aforementioned Japanese Unexamined Patent Application Publication No. 10-217818 has the problem that the airbag 204 disposed underneath the seat pad 202 may be damaged due to friction between the airbag 204 and the seat pad 202.

Furthermore, with the passenger protecting device disclosed in the aforementioned Japanese Unexamined Patent Application Publication No. 10-217818, the airbag 204 tends to inflate with maximum inflation around the middle portion thereof in the longitudinal direction, in the shape of a spindle. With such inflation of the airbag 204 in the shape of a spindle, the seat pad 202 is pushed up by strong force around the middle portion in the longitudinal direction thereof, but is not pushed up by strong force around portions on both the left and right sides thereof where the left and right thighs of the passenger are to be positioned, as compared with the middle portion. Accordingly, there is the need to employ an airbag with a great capacity as the airbag 204, sufficient for pushing up the left and right portions of the seat pad 202 by strong force. In addition, there is the need to employ an inflator with a high performance as the inflator 206, corresponding to the airbag 204 with a great capacity.

From document EP 1 369 315 A1, EP 1 459 942 A1 and EP 1 520 753 A1, passenger protecting devices are known comprising an inflatable bag disposed underneath a front portion of a seat cushion for pushing the lower face of the front portion of the seat cushion and a cover for covering the bag, wherein the inflatable bag with the cover is installed in a recess of a seat pan and the like.

It is an object of the present invention to provide a passenger protecting device for preventing an airbag disposed underneath a cushion from being damaged due to friction between the airbag and the cushion, or the like.

Furthermore, it is an object of the present invention to provide a passenger protecting device wherein the entire airbag including the left and right portions thereof is rapidly inflated so as to sufficiently push up the lower face of the entire seat cushion including the left and right portions thereof, without a gas generator with a high performance.

According to the present invention, these objects are achieved by a passenger protection device according to claim 1. The dependent claims define preferred or advantageous embodiments of the invention.

According to the invention, a passenger protecting device comprises: an inflatable bag disposed underneath the front portion of a seat cushion, for pushing up the lower face of the front portion of the seat cushion; a gas generator for inflating the bag in a case of emergency of a vehicle; and a cover for covering the bag, which opens or expands due to the pressure of the bag at the time of inflation of the bag, wherein an opening is provided in the seat pan below the seat cushion, and the bag is disposed below the seat pan, and is configured so as to pass thorough the opening and to press the seat cushion from below at the time of inflating.

According to the second aspect of the invention, the cover may be disposed so as to block the opening at least partially. Furthermore, the bag may be disposed within a retainer having an open upper face, formed in the shape of a box without a lid, the cover being disposed so as to cover the retainer. Then, the retainer may be fixed to at least the left and right frame portions of the seat.

An arrangement may be made wherein an opening is provided in the seat pan below the seat cushion, and the bag is disposed below the seat pan, and is configured so as to pass thorough the opening and to press the seat cushion from below at the time of inflating. With this configuration as well, ill comfort in sitting due to the inflation-awaiting bag and gas generator and the like jutting into the seat cushion can be prevented.

In this case, the cover is preferably disposed so as to block the opening at least partially. Thus, the seat cushion can be prevented from falling into the opening upon the passenger sitting in the seat, and comfort in sitting is maintained.

Furthermore, the passenger protecting device according to the present invention may have a configuration wherein the bag and the gas generator are mounted within the retainer, and the cover is disposed so as to cover the retainer, and accordingly, the combination of the bag, the retainer, and the cover, is mounted as a single unit, thereby facilitating mounting operations for mounting the passenger protecting device.

In this case, the retainer is preferably fixed to at least the left and right frame portions of the seat. Due to such a configuration, even in the event that passenger weight is applied to the inflated bag, the inflated bag can receive the passenger in a sure manner, since the bag is securely supported by the retainer.

Also, note that both the left and right end sides of the retainer may be directly fixed to the left and right frame portions by fastening devices such as bolts or the like or by welding or the like, or may be fixed through linking members such as brackets or the like. Also, a retainer supporting member may be provided so as to bridge between the left and fight frame portions, with the retainer provided on this supporting member.

This retainer may be fixed, not only to the left and right frame portions of the seat, but also to other portions (e.g., the seat pan, etc.) as well.

Also, an arrangement may be made wherein an opening is provided in the seat pan below the seat cushion, and the bag module is disposed such that a main plate portion serving as a cover is placed within the opening. This configuration also prevents ill comfort in sitting due to the inflation-awaiting bag and gas generator and the like jutting into the a gas generator for inflating the bag in a case of emergency of a vehicle; and a cover for covering the bag, which opens or expands due to the pressure of the bag at the time of inflation of the bag, wherein the cover comprises a main plate portion disposed above the bag, and a surrounding frame portion hanging down from the main plate portion, with the bag disposed within the surrounding frame portion; and wherein a recessed portion into which the surrounding frame portion intrudes is provided on the upper face of the seat pan below the seat cushion; and wherein a groove is provided on the base of the recessed portion, into which the lower end of the surrounding frame portion intrudes.

In a passenger protecting device, according to any one aspect of the invention, the bag may extend in the width direction of the seat cushion, and a bag envelope may be provided for surrounding said bag at least partway along the longitudinal direction. The bag envelope may surround only part of the bag in the longitudinal direction. The bag envelope may also surround from close to the left end to close to the right end of the bag. Further, the circumference of the bag envelope may be smaller than the circumference of the bag in the inflated state. Still further, the bag envelope may be linked to the seat pan.

The passenger protecting device according to an aspect of the present invention has a configuration wherein the bag is covered with the cover, thereby preventing damage of the bag due to friction between the bag and the seat cushion or the like. Thus, the bag may be formed with reduced durability, thereby reducing costs of the bag having such a configuration. Note that the cover opens or expands due to the pressure of the bag at the time of inflation of the bag. For example, the bag tears, separates from hooks, or deforms, due to inflation of the bag, whereby the inflating bag is released. The cover which expands at the time of inflation of the bag may be formed of an elastic material or a plastic material. Furthermore, because the bag is held to the cover by a holding member, the bag and cover can be integrally formed and mounted to the seat pan together.

If the passenger protecting device according to the present invention has a configuration wherein the bag is disposed within a recess formed on the upper face of the seat pan disposed underneath the cushion, and the cover is disposed so as to cover the recess, lumpiness due to the bag, the gas generator, and the like, disposed underneath the seat cushion, is reduced, thereby providing a comfortable seat.

An arrangement may be made wherein an opening is provided in the seat pan below the seat cushion, and the bag is disposed below the seat pan, and is configured so as to pass thorough the opening and to press the seat cushion from below at the time of inflating. With this configuration as well, ill comfort in sitting due to the inflation-awaiting bag and gas generator and the like jutting into the seat cushion can be prevented.

In this case, the cover is preferably disposed so as to block the opening at least partially. Thus, the seat cushion can be prevented from falling into the opening upon the passenger sitting in the seat, and comfort in sitting is maintained.

Furthermore, the passenger protecting device according to the present invention may have a configuration wherein the bag and the gas generator are mounted within the retainer, and the cover is disposed so as to cover the retainer, and accordingly, the combination of the bag, the retainer, and the cover, is mounted as a single unit, thereby facilitating mounting operations for mounting the passenger protecting device.

In this case, the retainer is preferably fixed to at least the left and right frame portions of the seat. Due to such a configuration, even in the event that passenger weight is applied to the inflated bag, the inflated bag can receive the passenger in a sure manner, since the bag is securely supported by the retainer.

Also, note that both the left and right end sides of the retainer may be directly fixed to the left and right frame portions by fastening devices such as bolts or the like or by welding or the like, or may be fixed through linking members such as brackets or the like. Also, a retainer supporting member may be provided so as to bridge between the left and fight frame portions, with the retainer provided on this supporting member.

This retainer may be fixed, not only to the left and right frame portions of the seat, but also to other portions (e.g., the seat pan, etc.) as well.

In the case of a configuration wherein the cover comprises a main plate portion disposed above the bag, and a surrounding frame portion hanging down from the main plate portion, with the bag disposed within the surrounding frame portion, the side perimeter of the bag is surrounded with the surrounding frame portion, and the upper side is covered with the main plate portion. Accordingly, damage due to abrasion or the like of the bag can be sufficiently prevented. Also, the bag can be prevented from directly striking against or hanging on the seat pan or the like can be prevented at the time of mounting the integrally assembled bag and cover to the seat pan.

In the case of a configuration wherein the holding member is disposed so as to traverse the surrounding frame portion, the bag is supported by the holding member from below, so the bag can be prevented in a sure manner from falling out of the cover at the time of mounting the integrally assembled bag and cover to the seat pan.

In the case of a configuration wherein the holding member is attached to the surrounding frame portion by engaging with a retaining portion provided on the surrounding frame portion, the holding member can be easily mounted to the surrounding frame portion.

According to an aspect of the present invention, providing a recessed portion on the upper face of the seat pan below the seat cushion into which surrounding frame portion intrudes prevents ill comfort in sitting due to the inflation-awaiting bag and gas generator and the like jutting into the seat cushion. Also, in this case, covering the recessed portion with the main plate portion prevents water (e.g., drinking water), trash, sand, and other like foreign material from entering, thereby preventing deterioration and damage of the airbag due to water, foreign material, and the like.

In this case, fastening the edge portion of the main plate portion to the perimeter portion of the recessed portion sufficiently prevents intrusion of water, foreign material, and the like, into the recessed portion.

Providing a groove on the base of the recessed portion, into which the lower end of the surrounding frame portion intrudes forms an arrangement wherein, even in the event that water does flow in along the inner wall portion of the recessed portion, the water only collects in the groove, so the bag can be prevented from getting wet from the water.

Also, an arrangement may be made wherein an opening is provided in the seat pan below the seat cushion, and the bag module is disposed such that the main plate portion serving as a cover is placed within the opening. This configuration also prevents ill comfort in sitting due to the inflation-awaiting bag and gas generator and the like jutting into the seat cushion. Also, the main plate portion prevents the seat cushion from falling into the opening upon the passenger sitting in the seat. The bag presses the main plate portion from below at the time of inflating, to be released or extended, and also so as to press the seat cushion from below through the opening.

In this case, an arrangement may be made wherein the retainer is disposed below the seat pan, and the bag module is mounted on the retainer. Also, in this case, the retainer is preferably fixed to at least the left and right frame portions of the seat. Due to this configuration, the bag is securely supported by the retainer at the time of the inflated bag receiving the passenger.

Again, the retainer may be fixed, not only to the left and right frame portions of the seat, but also to other portions (e.g., the seat pan, etc.). Both the left and right end sides of the retainer may be directly fixed to the left and right frame portions, or may be fixed through linking members such as brackets or the like, or a retainer supporting member may be provided so as to bridge between the left and fight frame portions, with the retainer provided on this supporting member.

Providing a tear portion in the main plate portion so as to tear open upon being pressed by the inflating bag allows the cover to tear open in the predetermined shape at the time of the bag inflating.

Furthermore, with the passenger protecting device according to an aspect of the present invention, the bag envelope may be included so as to cover at least a part of the bag along the longitudinal direction thereof, thereby preventing the middle portion of the bag along the longitudinal direction thereof from excessively expanding as compared with both ends thereof at the time of inflation of the bag, thereby sufficiently inflating both left and right ends of the bag. As a result, both left and right portions of the seat cushion are sufficiently pushed up from the bag disposed underneath the seat cushion. Furthermore, both left and right sides of the bag can be sufficiently inflated without using a high-performance gas generator, thereby reducing costs and weight of the gas generator.

Furthermore, the bag envelope may be formed so as to surround a middle portion of the bag along the longitudinal direction thereof, or may be formed so as to surround multiple parts along the longitudinal direction thereof. With such a configuration wherein the bag envelope is formed so as to cover a part of the bag along the longitudinal direction thereof, the bag envelope can be formed of a small amount of material.

The passenger protecting device according to an aspect of the present invention may have a configuration wherein the bag envelope is formed so as to surround the bag over the entire range from a portion around the left end up to a portion around the right end. With such a configuration, the bag can be inflated with generally the same magnitude (e.g., inflation width, or inflation cross-sectional area) over the range from a portion around the left end up to a portion around the right end. Thus, the lower face of the seat cushion is pushed up with generally the same pushing force over the range from the left portion up to the right portion.

With the passenger protecting device according to an aspect of the present invention, the bag envelope is preferably formed with a smaller surrounding length for surrounding the bag than with the inflated bag. With such a configuration, the maximum surrounding length of the bag is suppressed to the surrounding length of the bag envelope at the time of inflation of the bag, thereby increasing the pressure of the bag. Furthermore, this action effects sufficiently rapid inflation of the bag over the entire range thereof.

The passenger protecting device may have a configuration wherein the bag envelope is connected to the seat pan. With such a configuration, the inflated bag is restrained by the seat pan through the bag envelope. Thus, even in the event that pressing force is applied to the inflating bag in the forward direction from the waist of the passenger moving in the forward direction, forward movement of the bag is prevented or suppressed, thereby further reducing front movement of the body of the passenger.

The passenger protecting device may have a configuration wherein the gas generator disposed within the bag is fixed to the seat pan with a fixing member passing through the bag, and the bag is supported between the gas generator and the seat pan. With such a configuration, the bag is mounted onto the seat pan with an improved mounting strength. Furthermore, the tension applied to the fixing portion on the bag for fixing to the seat pan is reduced at the time of inflation of the bag.

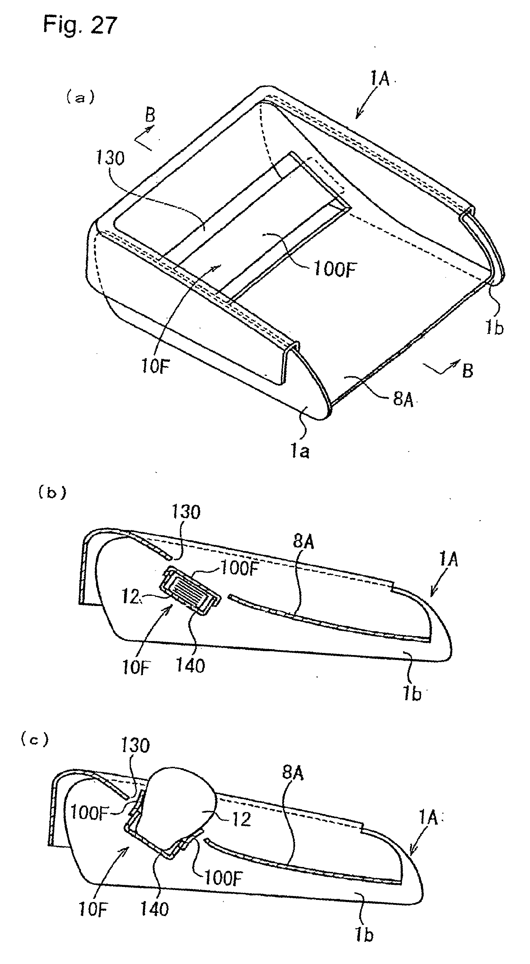

Further advantages of the present invention will be more easily understood from the following description of preferred embodiments with reference to the accompanying drawings, wherein only Fig. 27 shows an embodiment of the present invention.
Fig. 1 is a perspective view which shows a seat frame including a passenger protecting device.
Fig. 2 is a cross-sectional view taken along line II-II in Fig. 1.
Fig. 3 is a disassembled perspective view which shows another passenger protecting device.
Fig. 4 is a longitudinal cross-sectional view which shows the passenger protecting device shown in Fig. 3.
Fig. 5 is a cross-sectional view taken along line V-V in Fig. 4.
Fig. 6 is an explanatory diagram which shows another configuration for sealing both ends of an envelope cloth.
Fig. 7 is a disassembled perspective view which shows a combination of a bag with a bag envelope and an envelope cloth.
Fig. 8 is a perspective view which shows an arrangement example of an envelope cloth including tear lines.
Fig. 9 is a perspective view which shows another arrangement example of an envelope cloth including tear lines.
Fig. 10 is a perspective view which shows an arrangement example of an envelope cloth including an opening for releasing the inflated bag.
Fig. 11 is an explanatory diagram for describing another arrangement example of an envelope cloth.
Fig. 12 is a disassembled perspective view which shows a passenger protecting device.
Fig. 13 is an explanatory diagram which shows another configuration example of a patching plate.
Fig. 14 is an explanatory diagram which shows another configuration example of a patching plate.
Fig. 15 is a cross-sectional view which shows a conventional passenger protecting device.
Fig. 16 is a disassembled perspective view of a passenger protecting device.
Fig. 17 is a disassembled view illustrating the configuration of attaching the passenger protecting device shown in Fig. 16 to the seat pan.
Fig. 18 is a longitudinal-sectional view of a seat having the passenger protecting device shown in Fig. 16.
Fig. 19 is a plan view of a cover of the passenger protecting device shown in Fig. 16.
Fig. 20 is a longitudinal-sectional view of the passenger protecting device shown in Fig. 16 with the bag inflated.
Fig. 21 is an explanatory diagram of another configuration example of the cover.
Fig. 22 is an explanatory diagram of another configuration example of the cover.
Fig. 23 is an explanatory diagram of another configuration example of the cover.
Fig. 24 is an explanatory diagram of another configuration example of the cover.
Fig. 25 is a longitudinal-sectional view of a passenger protecting device.
Fig. 26 is a longitudinal-sectional view of a passenger protecting device.
Fig. 27 is a configuration diagram of a passenger protecting device according to an embodiment of the present invention.

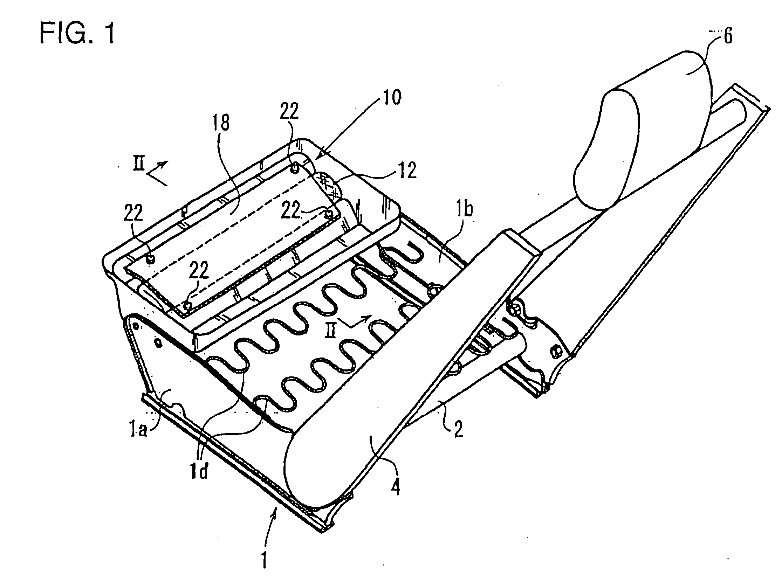

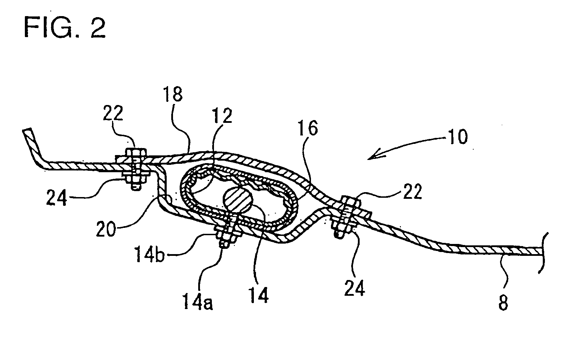

Fig. 1 is a perspective view which shows a seat frame of a seat including a passenger protecting device, and Fig. 2 is a cross-sectional view taken along line II-II in Fig. 1.

The frame forming the seat of an automobile comprises a base frame 1 and a back frame 4 rotatably mounted to the base frame 1 through a support shaft 2 and a reclining device (not shown). Furthermore, the back frame 4 includes a headrest 6 on the upper portion thereof. The base frame 1 includes a left and right side frames 1a and 1b, wherein a seat pan 8 is disposed between the front portions of the side frames 1a and 1b.

Furthermore, a seat cushion (not shown) and a seat bag (not shown) formed of urethane or the like is mounted on the base frame 1 and the back frame 4. The seat pan 8 is disposed underneath the front portion of the seat cushion. Note that reference numeral 1d in Fig. 1 denotes springs for supporting the seat cushion.

A passenger protecting device 10 comprises an inflatable bag 12 for pushing up the lower face of the front portion of the seat cushion, a gas generator 14 for inflating the bag 12, a bag envelope 16 for surrounding the bag 12, a cover 18 for covering the bag 12, the gas generator 14, and the bag envelope 16, which are disposed on the upper face of the seat pan 8.

With such a configuration, the seat pan 8 includes a recess 20 on the upper face thereof, extending in the width direction of the seat (in the left and right direction thereof), and the bag 12 is folded and stored in the recess 20 along with the bag envelope 16 in normal situations (except for emergency situations such as a collision of the vehicle or the like). Note that the bag 12 is disposed within the recess 20 so as to extend along the width direction thereof.

The bag envelope 16 is formed in the shape of a tube for surrounding the outer face of the bag 12. The bag envelope 16 is formed with a smaller surrounding length than with the bag 12 at the time of free inflation thereof.

Note that the bag envelope 16 may be formed with generally the same length in the width direction thereof (in the longitudinal direction of the bag 12) as with the bag 12, or may be formed with a smaller length thereof. Specifically, the bag envelope 16 is preferably formed with a length in the width direction of 40% to 100% of the length of the bag 12 in the width direction, more preferably with a length in the width direction of 50% to 90% thereof. The bag envelope 16 may be formed of a single envelope, or may be formed of multiple envelopes so as to surround multiple portions along the longitudinal direction. The bag envelope 16 formed of multiple envelopes is preferably formed with the sum of lengths of all the envelopes in the width direction within the aforementioned range.

The bag envelope 16 is preferably formed of a material or with a configuration wherein the bag envelope 16 does not readily stretch, or does not stretch at all, in the circumferential direction thereof. Furthermore, the bag envelope 16 preferably has a moisture-proof (waterproof) configuration. The bag envelope 16 may be formed of a relatively flexible material such as cloth, a synthetic resin sheet, a synthetic resin mesh sheet, or the like, or may be formed of a rigid material such as a metal sheet, metal mesh, or the like.

Furthermore, the passenger protecting device 10 has a configuration wherein the cylindrical gas generator 14 is disposed within the bag 12. The gas generator 14 is disposed such that the longitudinal direction thereof matches the width direction of the vehicle. The gas generator 14 includes gas nozzles (not shown) on the circumferential face thereof for discharging gas radially in all directions.

The gas generator 14 includes a stud bolt 14a protruding therefrom. Specifically, the stud bolt 14a passes through the lower faces of the bag 12 and the bag envelope 16, and the bottom of the recess 20, and protrudes downward from the seat pan 8. The stud bolt 14a is secured to the seat pan 8 with a nut 14b. Thus, the gas generator 14, the bag 12, and the bag envelope 16, are secured to the seat pan 8.

Note that the passenger protecting device 10 has a configuration wherein multiple stud bolts 14a are provided to the gas generator 14 in the longitudinal direction thereof at predetermined intervals for securing the gas generator 14, the bag 12, and the bag envelope 16, to the seat pan 8.

Furthermore, the cover 18 is mounted for covering the bag 12, the bag envelope 16, and the gas generator 14, disposed within the recess 20. The cover 18 is formed in the shape of a plate with a size sufficient for covering the entire area of the recess 20, and is secured to the seat pan 8 through a pair of the flanges facing upward on the front and rear sides of the vehicle by bolts 22 and nuts 24.

The cover 18 has a configuration wherein upon inflation of the bag 12, one of three actions is performed, i.e., 1) the cover 18 deforms so as to inflate upward following inflation of the bag 12, 2) the cover 18 tears due to the pressure from inflation of the bag 12 so as to allow further inflation of the bag 12, 3) the bolts 22 separate from the cover 18 due to inflation of the bag 12 so that the cover 18 is pushed up.

With the passenger protecting device 10 having such a configuration, upon detection of a frontal collision of the automobile, the gas generator 14 operates so as to discharge gas, and accordingly, the bag 12 inflates upward due to gas discharged from the gas generator 14 so as to push up or push away the cover 18. As a result, the front portion of the seat cushion is pushed up, or is pressed upward so as to reduce the flexibility thereof, thereby preventing or suppressing forward movement of the waist of the passenger.

With such a configuration, the bag envelope 16 is secured to the seat pan 8, and accordingly, the inflated bag 12 is restrained by the seat pan 8 through the bag envelope 16. This action prevents or suppresses the forward movement of the bag 12 at the time of the inflated bag 12 being affected by the forward pressing force from the waist of the passenger moving in the forward direction of the vehicle, thereby reducing forward movement of the body of the passenger.

Note that with such a configuration, the bag envelope 16 encompasses the entire bag 12 including portions around both left and right ends thereof, and accordingly, the bag 12 inflates with generally the same inflation (the same inflation width or inflation cross-sectional area) over the entire range including portions around both left and right ends. Thus, the lower face of the seat cushion is pushed up with generally the same pressing force over the entire range including the left and right sides thereof.

Furthermore, the bag envelope 16 is formed with a smaller surrounding length than the bag 12 at the time of free inflation thereof, and accordingly, with such a configuration wherein the bag 12 is inflated while being encompassed by the bag envelope 16, the maximum size (maximum diameter) thereof is suppressed to the size corresponding to the surrounding length of the bag envelope 16, thereby increasing the pressure of the bag 12. Thus, the bag 12 is rapidly inflated over the entire range.

The passenger protecting device 10 has a configuration wherein the bag 12, the bag envelope 16, and the gas generator 14, are mounted within the recess 20 formed on the upper face of the seat pan 8, and are covered with the cover 18, thereby preventing damage thereof due to friction between these components and the seat cushion, or the like. Furthermore, the cover 18 does away with lumpiness of the seat cushion due to the bag 12, the bag envelope 16, the gas generator 14, the recess 20, and the like, thereby providing a comfortable seat cushion.

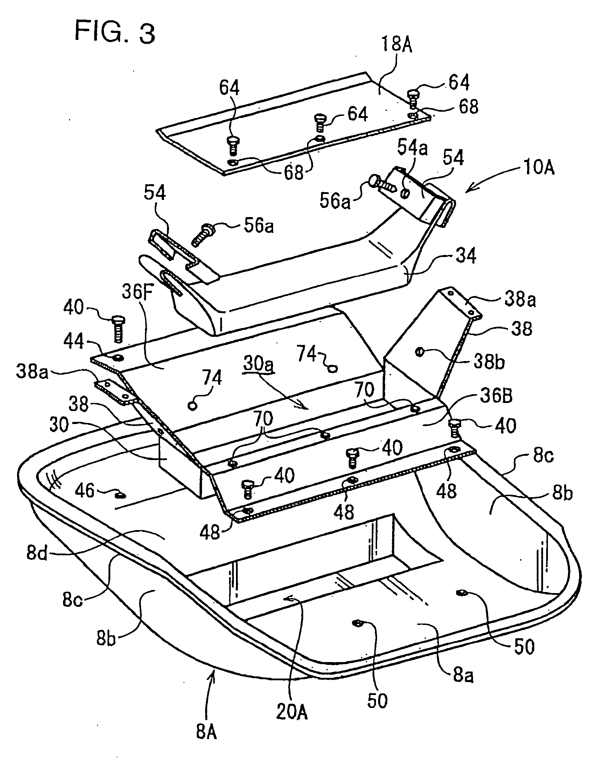

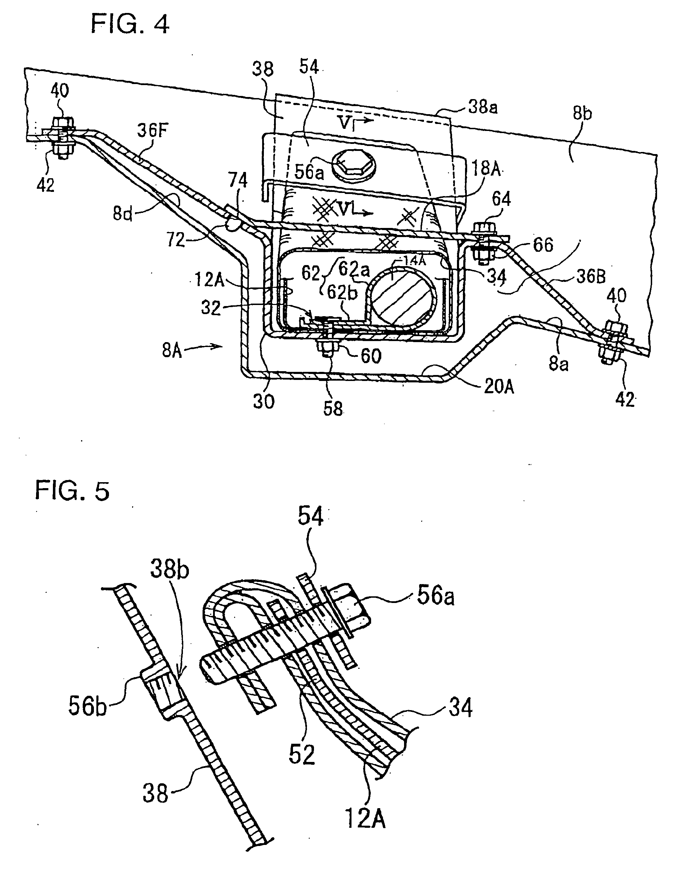

Fig. 3 is a disassembled perspective view which shows another passenger protecting device, Fig. 4 is a longitudinal cross-sectional view of the passenger protecting device, and Fig. 5 is a cross-sectional view taken along line V-V in Fig. 4.

A passenger protecting device 10A according to Fig. 3 includes a box-shaped retainer 30 without a lid disposed on the seat pan 8A, a bag 12A folded and disposed within the retainer 30, a gas generator 14A for inflating the bag 12A, a fixing member 32 for connecting and fixing the bag 12A and the gas generator 14A to the retainer 30 with stud bolts 58 described later, an envelope cloth 34 for wrapping the folded bag 12A so as to restrain the folded bag 12A, and a cover 18A mounted on the retainer 30 so as to cover an opening 30a on the upper face of the retainer 30.

The seat pan 8A includes a bottom 8a disposed along the lower face of the seat cushion (not shown), and a pair of side walls 8b and 8b erected from the left and right perimeters of the bottom 8a. The side walls 8b include flange portions 8c on the upper ends thereof, protruding in the horizontal direction. The bottom 8a is formed in the form of a curve over the region from the middle portion to the rear portion thereof in the moving direction of the vehicle. That is to say, the bottom 8a includes a recess 20A on the upper face thereof for mounting the retainer 30. Note that the front perimeter of the recess 20A extends so as to form a slanted face 8d with a uphill inclination toward the forward direction.

The retainer 30 is formed in the shape of a box without a lid having an opened upper face, and specifically, generally in the shape of a rectangular parallelepiped with a greater length in the width direction. The bag 12A is disposed within the retainer 30 so as to extend along the width direction. The front and rear perimeters along the opening 30a formed on the upper face of the retainer 30 protrudes so as to form a front supporting member 36F and a rear supporting member 36B for supporting the retainer 30 by being secured to the bottom 8a of the seat pan 8A. Furthermore, the left and right perimeters along the opening 30a thereof protrudes so as to form side-wall supporting members 38 and 38 for supporting the retainer 30 by being secured to the left and right side walls 8b and 8b of the seat pan 8A.

The front supporting member 36F extends from the front edge along the opening 30a formed on the upper face of the retainer 30 forward with a predetermined uphill inclination along the slanted face 8b formed of the front perimeter of the recess 20A, and the tip thereof is fixed to the bottom 8a of the seat pan 8 around the peak of the slanted face 8d with bolts 40 and nuts 42. Note that reference numeral 44 in Fig. 3 denotes a bolt inserting hole provided on the tip of the front supporting member 36F, and reference numeral 46 denotes a bolt inserting hole formed on the bottom 8a corresponding to the bolt inserting hole 44.

The rear supporting member 36B extends backward from the rear edge of the opening 30a formed on the upper face of the retainer 30 with a downhill inclination, and the tip thereof is secured to the bottom 8a of the seat pan 8 on the rear edge of the recess 20A with the bolts 40 and the nuts 42. Note that reference numeral 48 in Fig. 3 denotes a bolt inserting hole provided on the tip of the rear supporting member 36B, and reference numeral 50 denotes a bolt inserting hole formed on the bottom 8a corresponding to the bolt inserting hole 48.

The side-wall supporting members 38 extend upward from the left and right edges of the opening 30a formed on the upper face of the retainer 30 along the side walls 8b of the seat pan 8A. The tips of the side-wall supporting members 38 protrude in the horizontal direction so as to form flange portions 38a which are disposed on the flange portions 8c formed on the upper ends of the side walls 8b and secured thereto with bolts (not shown).

The envelope cloth 34 is formed in the shape of a tube with openings on both ends for mounting the bag 12A therewithin. Note that the envelope cloth 34 has a configuration wherein upon inflation of the bag 12A, the cloth 34 tears or expands following inflation of the bag 12A so as to allow further inflation of the bag 12A.

With such a configuration, the left and right ends of the bag 12A and the envelope cloth 34 are connected to the side-wall supporting members 38 of the retainer 30. As shown in Fig. 5, the bag 12A includes connection members 52 on both left and right ends thereof for connecting the bag 12A to the side-wall supporting members 38. As shown in the drawing, each connecting member 52 includes a bolt inserting hole (reference numeral is omitted).

With such a configuration, the envelope cloth 34 is formed with a greater length between both ends in the longitudinal direction than the distance between the connecting members 52 and 52 disposed on both ends of the bag 12A. As shown in Fig. 5, each of both ends of the envelope cloth 34 match the corresponding end of the bag 12A, and are folded back onto the reverse face (facing the side-wall supporting member 38) of the corresponding connecting member 52. As shown in the drawing, the envelope cloth 34 includes bolt inserting holes (reference numeral is omitted) at positions corresponding to the bolt inserting holes of the connecting members 52 such that each bolt inserting hole formed on the envelope cloth 34 matches the corresponding bolt inserting hole formed on the connecting member 52 at the time of folding back both ends of the envelope cloth 34 to the reverse faces of the connecting members 52.

Furthermore, a patching plate 54 is disposed on the front face of each connecting member 52 (which is opposite to the face onto which the end of the envelope cloth 34 is folded back) with the envelope cloth 34 introduced therebetween. Each patching plate 54 includes a bolt inserting hole 54a (Fig. 3) at a position corresponding to the bolt inserting hole formed on the connecting member 52. With such a configuration, the patching plate 54 is formed in the shape of a "U" so as to surround the front face and both left and right sides of the side-wall supporting member 38.

Note that each side-wall supporting member 38 includes a bolt inserting hole 38b (Fig. 3) at a position corresponding to the bolt inserting hole of the connecting member 52.

A bolt 56a is inserted into each combination formed of the bolt inserting holes of the patching plate 54, the envelope cloth 34, the connecting member 52, and the side-wall supporting member 38, and is screwed to a nut 56b (Fig. 5), whereby both ends of the bag 12A and the envelope cloth 34 are connected to the side-wall supporting members 38. Note that while description has been made regarding an arrangement wherein each nuts 56b is secured to the reverse face of the side-wall supporting member 38 by welding or the like as shown in Fig. 5, the arrangement is not restricted thereto.

Both ends of the envelope cloth 34 are folded down in two, and are supported and pressed between the patching plates 54 and the side-wall supporting members 38 by the aforementioned bolting. Thus, both ends of the envelope cloth 34 are sealed.

With such a configuration, the bag 12A includes the rod-shaped gas generator 14A therewithin, connected to the fixing member 32. The fixing member 32 is formed in the shape of a plate, is disposed so as to extend along the bottom of the retainer 30, and is disposed on the inner face of the lower portion of the bag 12A so as to press the lower portion of the bag 12A to the bottom of the retainer 30. A stud bolt 58 protrudes from the lower face of the fixing member 32. As shown in Fig. 4, the stud bolt 58 is inserted into bolt inserting holes (reference numerals are omitted) formed on the lower portions of the bag 12A and the envelope cloth 34, and on the bottom of the retainer 30, so as to protrude from the lower face of the retainer 30. A nut 60 is screwed to the stud bolt 58, whereby the lower portions of the bag 12A and the envelope cloth 34 are supported and pressed between the fixing member 32 and the bottom of the retainer 30, as well as fixing the fixing member 32 to the retainer 30.

The gas generator 14A is disposed on the upper face of the fixing member 32 such that the longitudinal direction thereof matches the width direction, and is fixed to the fixing member 32 with a bracket 62. With such a configuration, the bracket 62 is disposed so as to protrude from the rear edge of the fixing member 32, and is formed of a C-shaped band portion 62a formed in the shape of a "C" protruding from the upper faces of the fixing member 32, and a flange portion 62b extending from the tip of the C-shaped band portion 62a along the upper faces of the fixing member 32. The aforementioned stud bolt 58 is inserted so as to protrude downward from the flange portion 62b, and passes through the fixing member 32 so as to protrude downward from the fixing member 32. The gas generator 14A is inserted into a space surrounded by the C-shaped band portion 62a, following which the nut 60 is screwed to the stud bolt 58, whereby the flange portion 62b is pressed and fixed to the fixing member 32, thereby fixing the gas generator 14A to the fixing member 32.

The cover 18A is formed generally in the shape of a rectangle with an area generally sufficient for covering the entire opening 30a formed on the upper face of the retainer 30. The cover 18A is disposed such that the front edge thereof matches the upper face of the front supporting member 36F, and the rear edge thereof matches the upper face of the rear supporting member 36B. As shown in Fig. 4, the rear edge of the cover 18A is fixed to the rear supporting member 36B with bolts 64 and nuts 66. In Fig. 3, reference numeral 68 denotes a hole formed on the rear end of the cover 18A for inserting the bolt 64, and reference numeral 70 denotes a bolt inserting hole formed on the rear supporting member 36B corresponding to the bolt inserting hole 68.

As shown in Fig. 4, the cover 18A includes snap pins 72 on the lower face of the front edge thereof, protruding therefrom. The snap pins 72 are elastically engaged to the pin engaging openings 74 formed on the front supporting member 36F, whereby the front edge of the cover 18A is secured to the front supporting member 36F. Upon inflation of the bag 12A, the snap pins 72 is disengaged from the pin engaging openings 74, and the cover 18A is opened upward in the shape of a flap with the rear edge thereof as a fulcrum.

With the passenger protecting device 10A having such a configuration, upon detection of a frontal collision of the automobile, the gas generator 14A operates so as to discharge gas, thereby inflating the bag 12A due to gas discharged from the gas generator 14A. In this case, the envelope cloth 34 is pressed in the expanding direction by actions of the bag 12A, and tears or expands following inflation thereof so as to allow further inflation of the bag 12A. The inflating airbag 12A further inflates upward while pressing and opening the cover 18A so as to push up the front portion of the seat cushion, or so as to reduce the flexibility thereof due to pressure of the bag 12A disposed underneath the front portion of the seat cushion, thereby preventing or suppressing front movement of the waist of the passenger.

With the configuration according to Figs. 3 and 4, the front supporting member 36F is disposed so as to extend forward from the front edge of the opening 30a formed on the upper face of the retainer 30 with a uphill inclination along the slanted face 8d formed on the front edge of the recess 20A of the seat pan 8A, extending forward with a uphill inclination. Upon inflation of the bag 12A, the bag 12A inflating forward comes into contact with the front supporting member 36F. Thus, even in the event that extremely strong pressing force is applied to the inflating bag 12A in the forward direction from the waist of the passenger, the front supporting member 36F receives the bag 12A, thereby preventing forward movement of the bag 12A.

The passenger protecting device 10A has a configuration wherein the bag 12A, the gas generator 14A, the fixing member 32, the envelope cloth 34, and the like, disposed within the retainer 30, are covered with the cover 18A, thereby preventing damage thereof due to friction between the seat cushion and these components. Furthermore, this configuration does away with lumpiness of on the seat cushion due to these components, thereby providing a comfortable seat cushion.

Next, a procedure for mounting the passenger protecting device 10A onto the seat pan 8A will be described.

First, the gas generator 14A is inserted into a space surrounded by the C-shaped band portion 62a of the fixing member 32, and the stud bolt 58 is inserted into the bolt inserting hole formed on the lower portion of the bag 12A so as to protrude outward therefrom, as well as disposing the fixing member 32 within the bag 12A. Subsequently, the bag 12A is folded into a long and slender form, following which the envelope cloth 34 is mounted onto the folded body formed of the bag 12A. The stud bolt 58 is inserted into the bolt inserting hole formed on the lower portion of the envelope cloth 34, as well, so as to protrude therefrom.

Next, the folded body formed of the bag 12A surrounded by the envelope cloth 34 is disposed within the retainer 30. In this case, the stud bolt 58 protruding from the lower portion of the envelope cloth 34 is inserted into the bolt inserting hole formed on the bottom of the retainer 30. Subsequently, the nut 60 is screwed to the stud bolt 58 from the lower side of the retainer 30, whereby the fixing member 32 is fixed to the retainer 30. Furthermore, both ends of the envelope cloth 34 are folded back onto the reverse face of the connecting members 52 disposed at both ends of the bag 12A, and the folded ends of the envelope cloth 34 and the connecting members 52 are secured to the corresponding side-wall supporting members 38 with the bolts 56a through the patching plates 54.

Subsequently, the cover 18A is mounted onto the retainer 30. Subsequently, the retainer 30 is mounted onto the seat pan 8A.

As described above, with the mounting sequence for the passenger protecting device 10A, the bag 12A, the envelope cloth 34, the gas generator 14A, the fixing member 32, and the cover 18A, are mounted onto the retainer 30 beforehand, thereby efficiently performing mounting operations for mounting the passenger protecting device 10A onto the seat pan 8A.

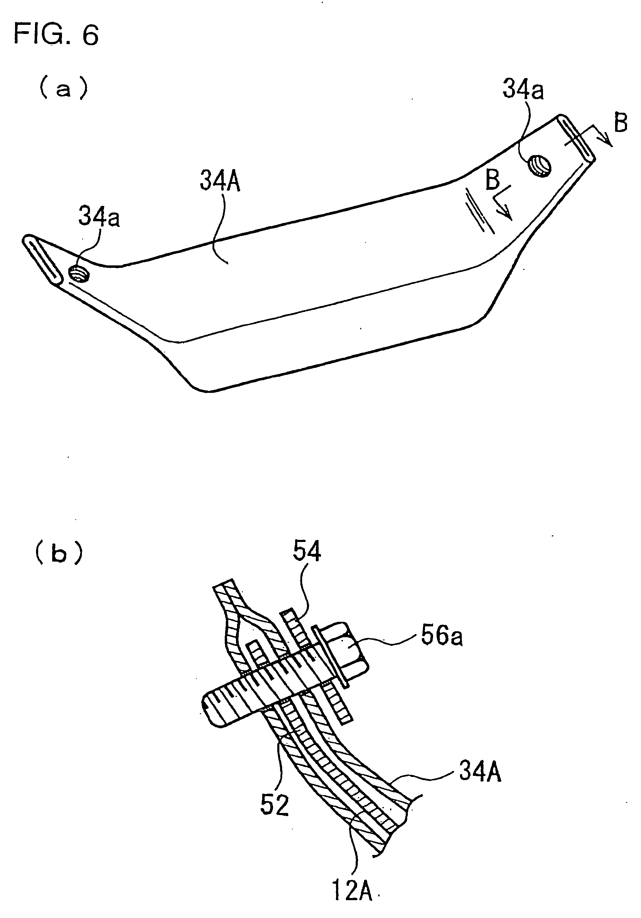

While description has been made regarding an arrangement as shown in Fig. 3 through Fig. 5 wherein both ends of the envelope cloth 34 are folded back onto the reverse face of the connecting members 52, and each end of the envelope cloth 34 folded down in two is pressed between the patching plate 54 and the side-wall supporting member 38 so as to seal each end of the envelope cloth 34, the method for sealing both ends of the envelope cloth is not restricted to the aforementioned arrangement. Fig. 6(a) is a perspective view which shows another configuration for sealing both ends of the envelope cloth, wherein Fig. 6(b) is a cross-sectional view taken along line B-B in Fig. 6(a). In Fig. 6, the same reference numerals denote the same components as in Fig. 3 through Fig. 5.

An envelope cloth 34A shown in Fig. 6 is formed in the shape of a tube as with the envelope cloth 34 shown in Fig. 3 through Fig. 5 described above, and the bag 12A is inserted into either of the openings formed on both ends thereof so as to be stored therewithin. The envelope cloth 34A has a configuration wherein the openings of both ends thereof are closed such that the perimeter parts on each opening facing one another are in contact with each other, following which these perimeter parts are connected one to another with connecting means such as seaming, welding, or the like, thereby sealing the envelope cloth 34A. Note that reference numeral 34a in Fig. 6(a) denotes holes for inserting bolts 56a, formed on both ends of the envelope cloth 34A so as to match the bolt inserting holes formed on the connecting members 52 disposed on the bag 12A.

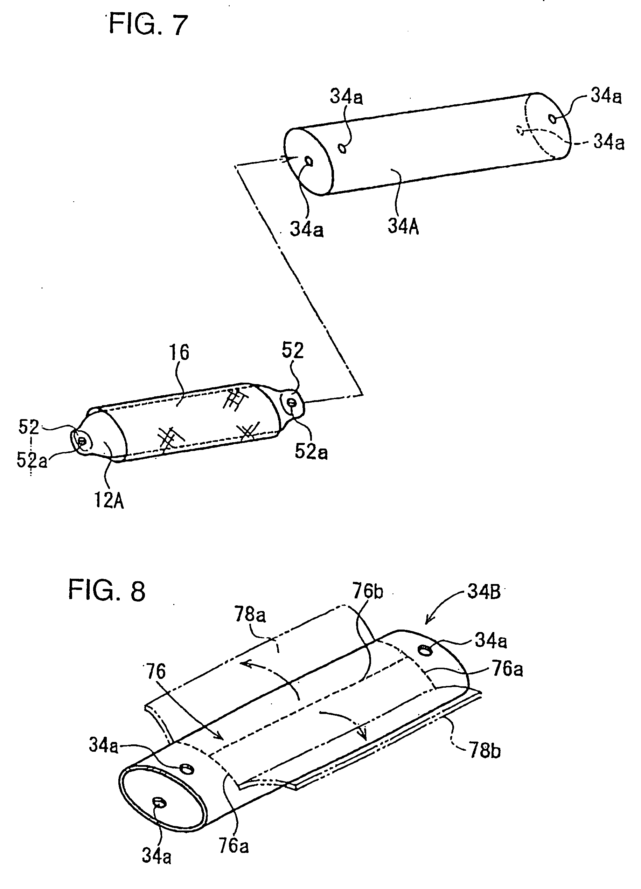

While description has been made regarding an arrangement without any bag envelope as shown in Fig. 3 through Fig. 5, and Fig. 6, described above, an arrangement including a bag envelope may be made. In this case, as shown in Fig. 7, the bag envelope 16 is mounted onto the bag 12A beforehand, following which the bag 12A with the bag envelope 16 is disposed within the envelope cloth 34A. Note that reference numeral 52a in Fig. 7 denotes bolt inserting holes formed on the connecting members 52 disposed on both ends of the bag 12A.

While description has been made regarding an arrangement as shown in Fig. 7, including the envelope cloth 34A shown in Fig. 6, an arrangement may be made, including the envelope cloth 34 shown in Fig. 5 through Fig. 7.

The material of the envelope cloth is not restricted in particular, rather, the envelope cloth may be formed of various kinds of materials such as cloth like the bag or the bag envelope, or with synthetic resin, metal, or the like, for example.

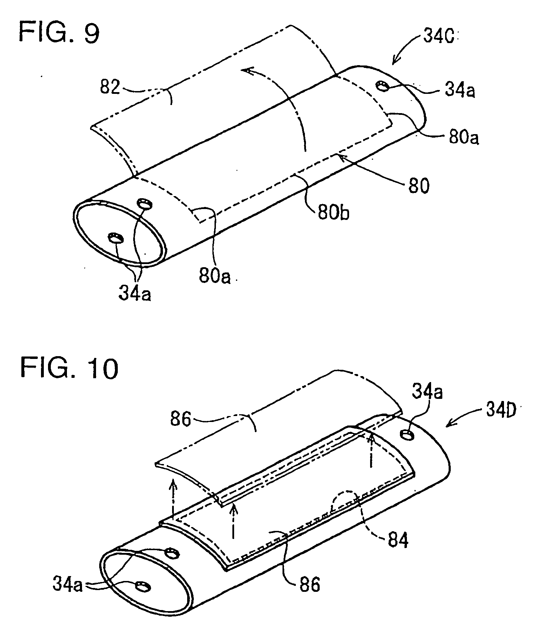

While description has been made regarding an arrangement with an unshown mechanism of the envelope cloth for allowing inflation of the bag at the time of inflation of the bag as shown in Fig. 3 through Fig. 5, and Fig. 6, the mechanism is not restricted in particular. For example, an arrangement may be made wherein the envelope cloth includes tear lines (lines along which the envelope cloth is to tear) formed of perforations, grooves, or the like, and upon inflation of the bag, the envelope cloth tears along the tear lines so as to allow inflation of the bag. Furthermore, an arrangement may be made wherein the envelope cloth includes an opening beforehand so as to allow inflation of the bag, and the opening is closed with a closing member in normal situations. Fig. 8 and Fig. 9 are perspective views which show envelope clothes 34B and 34C, respectively, including such tear lines, and Fig. 10 is a perspective view which shows an envelope cloth 34D including an opening for allowing inflation of the bag.

The envelope cloth 34B shown in Fig. 8 includes an H-shaped tear line 76 formed of a pair of side tear lines 76a and 76a on both left and right ends on the upper face thereof, extending along the circumferential direction thereof, and a center tear line 76b, both ends of which are connected to the middle portions of the side tear lines 76a, extending around the middle portion of the upper face thereof in the longitudinal direction.

With the envelope cloth 34B, upon inflation of the bag (not shown) therewithin, the upper face of the envelope cloth 34B tears in the shape of an "H" along the tear lines 76a, 76a, and 76b, so that the upper face is opened. In Fig. 8, reference numerals 78a and 78b denote two flaps formed due to tearing of the upper face of the envelope cloth 34B, which are shown by two-dot broken lines. The flaps 78a and 78b are opened upward following inflation of the bag.

The envelope cloth 34C shown in Fig. 9 includes a C-shaped tear line 80 formed of a pair of side tear lines 80a and 80a on both left and right ends on the upper face thereof, extending along the circumferential direction thereof, and a longitudinal tear line 80b both ends of which are connected to the rear ends of the side tear lines 80a, extending along the rear end of the upper face thereof in the longitudinal direction.

With the envelope cloth 34C, upon inflation of the bag (not shown) therewithin, the upper face of the envelope cloth 34C tears in the shape of a "C" along the tear lines 80a, 80a, and 80b, so that the upper face is opened. In Fig. 9, reference numeral 82 denotes a flap formed due to tearing of the upper face of the envelope cloth 34C, which is shown by two-dot broken lines. The flap 82 is opened upward following inflation of the bag.

The envelope cloth 34D shown in Fig. 10 includes an opening 84 on the upper face thereof beforehand for allowing inflation of the bag at the time of inflation of the bag (not shown) therewithin. The opening 84 is closed with a closing sheet 86 in normal situations.

With the envelope cloth 34D having such a configuration, upon inflation of the bag therewithin, the closing sheet 86 separates from the upper face of the envelope cloth 34D due to inflation pressure of the bag, thereby releasing the opening 84. This mechanism allows the bag to inflate upward through the opening 84.

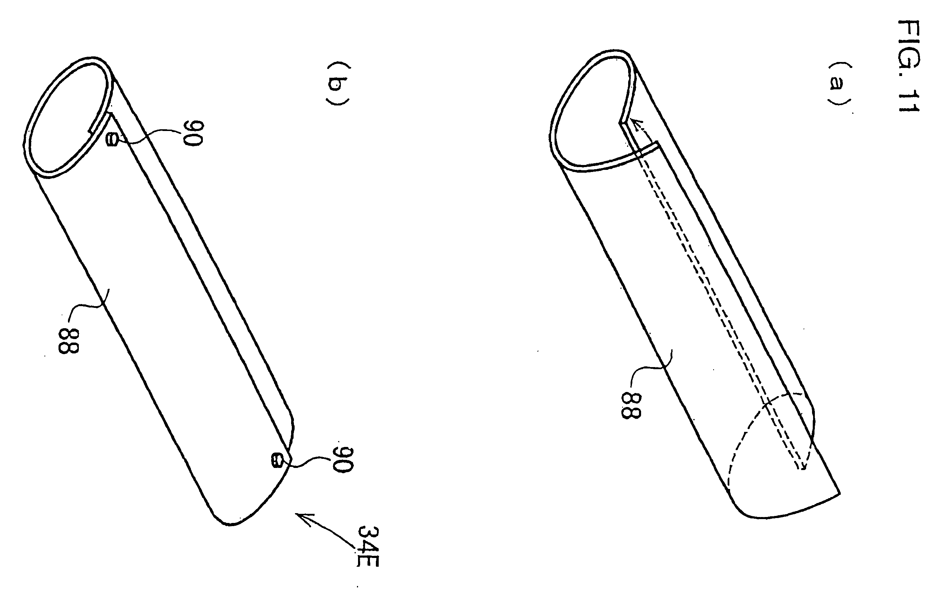

While description has been made above regarding an arrangement, wherein the envelope cloth is formed in the shape of a tube beforehand, the envelope cloth is not restricted to the aforementioned arrangements. For example, a flat sheet member may be wrapped around in the form of a tube so as to form an envelope cloth. Fig. 11 is an explanatory diagram which shows an envelope cloth 34E having such a configuration, wherein (a) shows a sheet member at the time of wrapping, and (b) shows the sheet member with wrapping completed.

The envelope cloth 34E is formed of a sheet member 88 formed of cloth, synthetic resin, metal, or the like, and is rolled, following which a pair of edges are engaged one to another with hooks 90, whereby wrapping thereof is completed. With the envelope cloth 34E having such a configuration, upon inflation of the bag (not shown) therewithin, the hooks 90 are disengaged due to inflation pressure of the bag, whereby the pair of the edges of the sheet member 88 are disengaged so as to open both sides thereof.

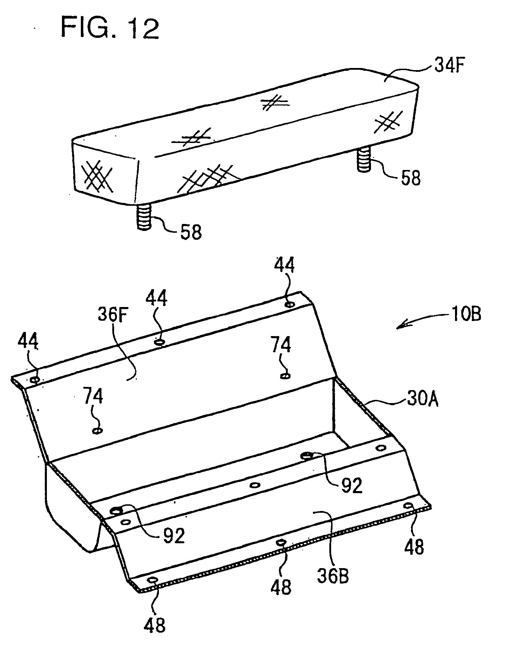

Note that the passenger protecting device is not restricted to an arrangement wherein both ends of the bag are connected to the retainer or the sheet pan. Fig. 12 is a disassembled perspective view which shows a passenger protecting device 10B having such a configuration. Note that, in Fig. 12, the same components are denoted by the same reference numerals as in Fig. 3 through Fig. 5.

The passenger protecting device 10B has a configuration wherein the bag (not shown) does not include any connecting members on both ends thereof. Furthermore, an envelope cloth 34F for wrapping the folded body of the bag does not include any bolt inserting holes on both ends thereof. In such a configuration, the envelope cloth 34F is formed in the shape of a bag for wrapping the entire folded body of the bag. The retainer 30A for storing the bag and the envelope cloth 34F has generally the same configuration as with the retainer 30 without side-wall supporting members 38 and 38 disposed on both left and right sides thereof shown in Fig. 3 through Fig. 5.

The passenger protecting device 10B has a configuration wherein the bag and the envelope cloth 34F are fixed within the retainer 30A by the stud bolt 58 protruding from the lower face of the fixing member (not shown) disposed within the bag.

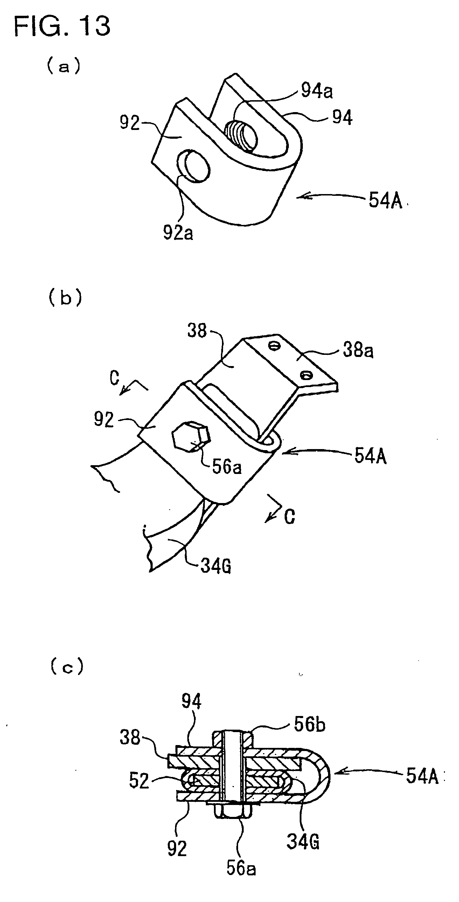

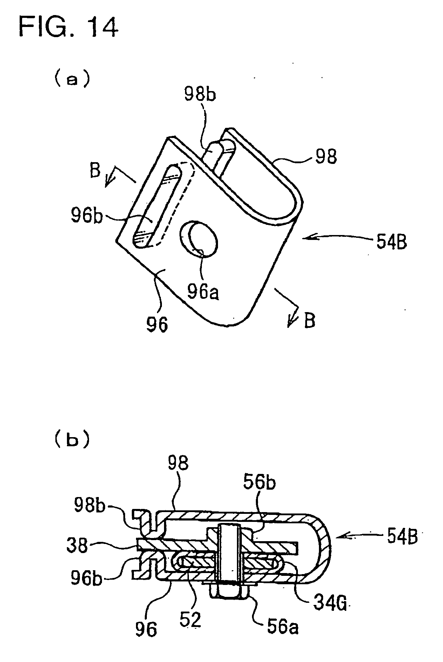

Furthermore, the configuration of the patching plate, used for connecting both ends of the bag to the side-wall supporting members of the retainer, is not restricted to the arrangements shown in Fig. 3 through Fig. 5 described above. Fig. 13(a) is a perspective view which shows a different patching plate 54A, Fig. 13(b) is a perspective view which shows the patching plate 54A mounted on the side-wall supporting member, and Fig. 13(c) is a cross-sectional view taken along line C-C in Fig. 13(b). On the other hand, Fig. 14(a) is a perspective view which shows yet another patching plate 54B, Fig. 14(b) is a cross-sectional view which shows the patching plate 54B mounted to the side-wall supporting member taken along line B-B in Fig. 14(a), which corresponds to Fig. 13(c). The patching plate 54A shown in Fig. 13 is formed generally in the shape of a "U" for surrounding the side-wall supporting member 38 over the front face thereof (the face for mounting the connecting member 52 disposed at the end of the bag), one of the sides thereof, and the rear face opposite to the front face. Note that in Fig. 13(b) and (c), reference numeral 34G denotes an envelope cloth for wrapping the bag and the connecting members 52 disposed on both ends thereof.

The patching plate 54A includes bolt inserting holes 92a and 94a at positions on a front-face portion 92 thereof for being mounted facing the front face of the side-wall supporting member 38, and a rear-face portion 94 for being mounted facing the rear face of the side-wall supporting member 38, corresponding to the hole (reference numeral is omitted in Fig. 13) formed on the side-wall supporting member 38 for inserting the bolt 56a. Furthermore, the nut 56b is disposed on the outer face of the rear-face portion 94 (which is opposite to the face facing the side-wall supporting member 38), wherein the bolt 56a which has passed through the bolt inserting hole 94a is screwed to the nut 56b. Note that the nut 56b is secured to the rear-face portion 94 by welding or the like.

Both ends of the bag are connected to the side-wall supporting members 38 using the patching plates 54A as follows. First, each connecting member 52 disposed at the end of the bag is positioned on the front face of the side-wall supporting member 38, following which the patching plate 54A is mounted onto the side-wall portion 38 so as to surround the connecting member 52 and the side-wall supporting member 38 between the front-face portion 92 and the rear-face portion 94. Subsequently, the bolt 56a is inserted from the front face of the side-wall supporting member 38 into the bolt inserting holes formed on the front-face portion 92, the envelope cloth 34G, the connecting member 52, the side-wall supporting member 38, and the rear-face portion 94, following which the bolt 56a is screwed to the nut 56b. Thus, the connecting member 52 and the side-wall supporting member 38 are pressed between the front-face portion 92 and the rear-face portion 94, thereby fixing the connecting member 52 to the side-wall supporting member 38.

Note that the present passenger protecting device has the same configuration as shown in Fig. 3 through Fig. 5 described above, except for the above-described configuration for connecting both ends of the bag to the side-wall supporting members using the patching plates 54A, and the same components in Fig. 13 are denoted by the same reference numerals as in Fig. 3 through Fig. 5.

The patching plate 54B shown in Fig. 14 is formed in the shape of a "U" in the same way as with the aforementioned patching plate 54A described above, is formed of a front-face portion 96 for being mounted facing the front face of the side-wall supporting member 38, and a rear-face portion 98 for being mounted facing the rear face of the side-wall supporting member 38, and is mounted onto the side-wall supporting member 38 so as to surround the connecting member 52 of the end of the bag and the side-wall supporting member 38 between the front-face portion 96 and the rear-face portion 98. With the present example, the bag and the connecting members 52 disposed on both ends thereof are wrapped by the envelope cloth 34G, as well.

The patching plate 54B includes a bolt inserting hole 96a at a position on only the front-face portion 96, corresponding to the hole (reference numeral thereof is omitted in Fig. 14) formed on the side-wall supporting member 38 for inserting the bolt 56a. The nut 56b is disposed on the rear face of the side-wall supporting member 38 (which is to be positioned between the side-wall supporting member 38 and the rear-face portion 98 of the patching plate 54), wherein the bolt 56a is screwed to the nut 56. The nut 56b is fixed to the side-wall supporting member 38 by welding or the like.

The patching plate 54B according to the present example includes protrusions 96b and 98b protruding from the inner faces of the front-face portion 96 and the rear-face portion 98, respectively (these inner faces are positioned facing one to another). The protrusions 96b and 98b protrude around the tips of the front-face portion 96 and the rear-face portion 98, respectively, facing one to another, as shown in Fig. 14(b).

As shown in Fig. 14(b), the protrusion 96b is formed with a height protruding from the inner face of the front-face portion 96 generally the same as the total thickness of the connecting member 52 and the envelope cloth 34G which wraps the connecting member 52. On the other hand, the protrusion 98b is formed with a greater height protruding from the inner face of the rear-face portion 98 than the height of the nut 56b protruding from the rear face of the side-wall supporting member 38. Note that the gap between the protrusions 96b and 98b formed on the tips thereof is generally the same as the thickness of the side-wall supporting member 38, or is somewhat smaller than the thickness thereof.

Both ends of the bag are connected to the side-wall supporting members 38 using the patching plates 56B as follows. First, each connecting member 52 disposed on the end of the bag is positioned on the front face of the side-wall supporting member 38, following which the patching plate 54B is mounted onto the side-wall supporting member 38 such that the connecting member 52 and the side-wall supporting member 38 are supported between the front-face portion 96 and the rear-face portion 98. In this case, the side-wall supporting member 38 is supported between the protrusions 96b and 98b protruding from the inner faces of the front-face portion 96 and the rear-face portion 98, respectively, whereby the patching plate 54B is temporarily fixed to the side-wall supporting member 38. Subsequently, the bolt 56a is inserted from the front face of the side-wall supporting member 38 into the bolt inserting holes formed on the front-face portion 96, the envelope cloth 34G, the connecting member 52, and the side-wall supporting member 38, following which the bolt 56a is screwed to the nut 56b disposed on the rear face of the side-wall supporting member 38. Thus, the connecting member 52 is supported and pressed between the front-face portion 96 and the side-wall supporting member 38, whereby the connecting member 52 is secured to the side-wall supporting member 38.

The passenger protecting device according to the present example has the same configuration as in Fig. 3 through Fig. 5 described above, except for the above-described configuration for connecting the both ends of the bag to the side-wall supporting portions using the patching plates 54B, and the same components shown in Fig. 14 are denoted by the same reference numerals as in Fig. 3 through Fig. 5.

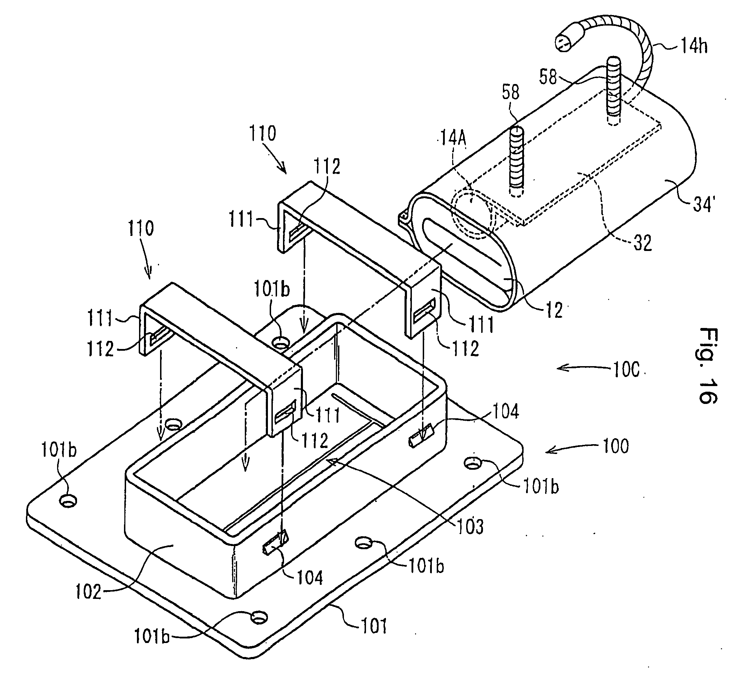

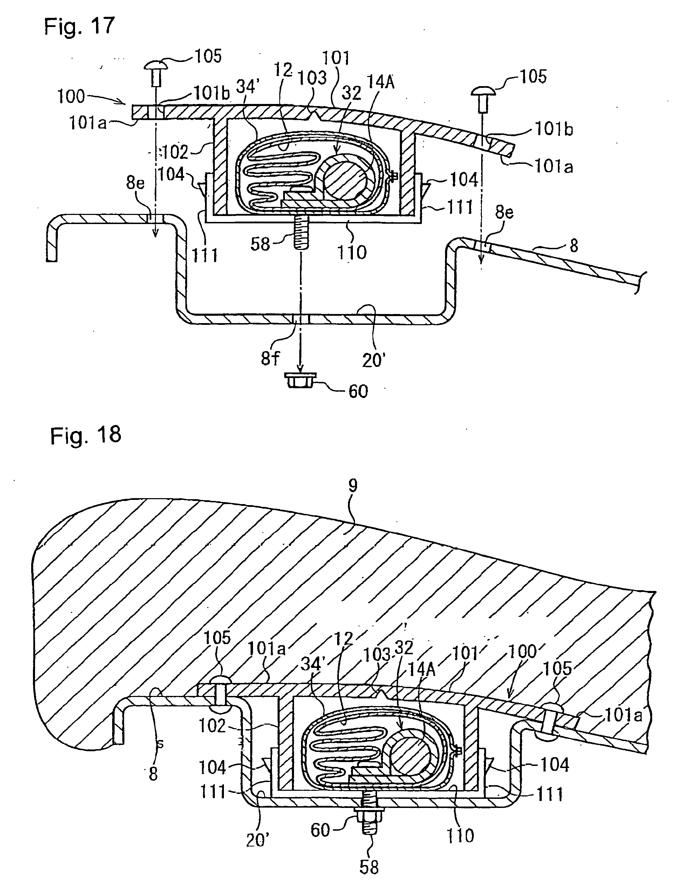

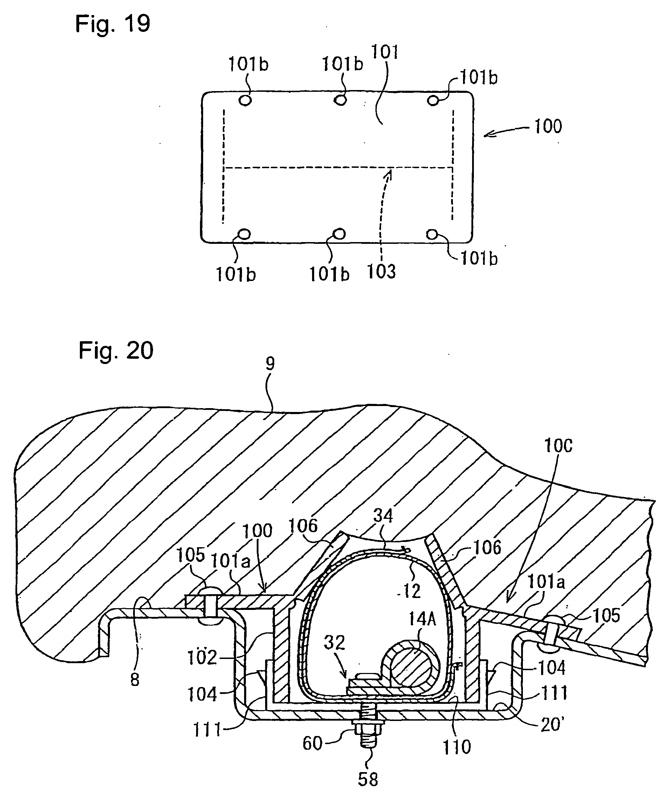

Fig. 16 illustrates a disassembled perspective view of a passenger protecting device 10C, Fig. 17 is a disassembled view (longitudinal-section view) illustrating the configuration of attaching this passenger protecting device 10C to the seat pan, Fig. 18 is a longitudinal-section view of a seat having this passenger protecting device 10C, Fig. 19 is a plan view of a cover of the passenger protecting device 10C, and Fig. 20 is a longitudinal-section view of the passenger protecting device 10C with the bag inflated.

The passenger protecting device 10C comprises a bag 12 long in the horizontal direction, which is folded up and placed on a seat pan 8, a gas generator 14A for inflating the bag 12, a fixing member 32 whereby the bag 12 and the gas generator 14A are each linked and fixed to the seat pan 8 by a stud bolt 58, an envelope cloth 34' for wrapping the folded article of the bag 12 so as to restrain the bag 12 in the folded state, a cover 100 for covering the folded article of the bag 12, and a holding member 110 for holding the folded article of the bag 12 to the cover 100.

The cover 100 comprises a main plate portion 101 disposed above the folded article of the bag 12, a surrounding frame portion 102 hanging down from the lower face of the main plate portion 101, a tear line 103 for tearing open the main plate portion 101 at the time of the bag 12 inflating, and retaining claws 104 for the holding member 110 retaining against the surrounding frame portion 102. In the present embodiment, the main plate portion 101 is a generally rectangular plate shape. The surrounding frame portion 102 is a generally rectangular cylindrical shape longer in the sideways direction, with each of the faces extending along the four sides of the main plate portion 101. The edge portion 101a of the main plate portion 101 extends further outwards than the perimeter of the surrounding frame portion 102. Retaining claws 104 are erected on the outer face of each wall portion at the front side and rear side of the surrounding frame portion 102.

With this device, as shown in Fig. 19, the tear line 103 comprises a center tear portion which passes through the center portion of the main plate portion 101 and extends in the left and right directions, and a left tear portion and right tear portion which each connect to the left end and right end of the center tear portion. The tear line 103 is formed of a groove provided on the lower face of the main plate portion 101. The left tear portion and right tear portion each extend in the front and back directions (the front and back directions of the seat) along the base edges of the left and right wall portions of the surrounding frame portion 102. The ends of the center tear portion merge with around the center of the left tear portion and the right tear portion, respectively. At the time of the bag 12 inflating, the main plate portion 101 tears open along the center tear portion and left tear portion and right tear portion, forming two flaps 106 and 106 (Fig. 20) which open toward the front and the back, respectively.

The cover 100 is formed of a synthetic resin such as polypropylene or the like, but is not restricted thereto.

The holding member 110 is disposed so as to traverse the lower side of the surrounding frame portion 102 in the front-back direction. Retaining pieces 111 and 111, which pass around from the lower side of the surrounding frame portion 102 to the outer side faces of the front and rear wall portions of the surrounding frame portion 102, are provided on both ends of the holding member 110. Each retaining piece 111 has a retaining hole 112 to which a retaining claw 104 engages.

This holding member 110 is formed of synthetic resin or metal for example, but is not restricted thereto.

With this device, a recessed portion 20' where the surrounding frame portion 102 intrudes is formed on the upper face of the front portion of the seat pan 8.

Other configurations of the passenger protecting device 10C are the same as those of the above-described passenger protecting device 10A, and the same reference numerals indicate the same portions.

The procedures for assembling the passenger protecting device 10C and the procedures for mounting to the seat pan 8 will be described below.

In this arrangement as well, first, a rod-shaped gas generator 14A is linked to the fixing member 32 with the fixing member 32 being disposed within the bag 12, and with a stud bold 58 for fixing the fixing member 32 externally protruding from the bag through a bolt through hole (symbol omitted). Also, a harness 14h for conducting electricity to the gas generator 14A is extended out from the bag 12 through a harness extending opening (omitted from the drawings) of the bag 12. Next the bag 12 is folded in a long and slender shape, and the folded article of the bag 12 is covered with the envelope cloth 34'. The stud bolt 58 also protrudes from a bolt through hole (symbol omitted) at the lower portion of the envelope cloth 34'.

Next, the folded article of the bag 12 covered by the envelope cloth 34' is positioned within the surrounding frame portion 102 of the cover 100. Next, the holder member 110 is disposed so as to traverse the lower side of the surrounding frame portion 102, and the retaining pieces 111 on both ends thereof are retained by the retaining claws 104. Thus, the folded article of the bag 12 is supported from the below by the holding member 110, and is held within the surrounding frame portion 102.

Next, the stud bolt 58 protruding downwards from the folded article of the bag 12 is inserted into a bolt through hole 8f (Fig. 17) on the base of the recessed portion 20', and the surrounding frame portion 102 is made to intrude into the recessed portion 20'. At this time, the edge portion 101a of the main plate portion 101 extending outwards from the perimeter of the surrounding frame portion 102 overlaps with the perimeter of the recessed portion 20', so that the main plate portion 101 covers the recessed portion 20'.

Subsequently, the stud bolt 58 is fastened with a nut 60 from the lower side of the seat pan 8, and the fixing member 32 is fixed to the base portion of the recessed portion 20'. Thus, the lower portions of the bag 12 and the enveloped cloth 34' are pinched and fixed between the fixing member 32 and the base of the recessed portion 20'. Further, the perimeter portion 101a of the main plate portion 101 is fastened to the seat pan 8 by rivets 105 through rivet through holes 101b and 8e (Fig. 17). Thus, the passenger protecting device 10C is mounted to the seat pan 8.

With the passenger protecting device 10C, the folded article of the bag 12 can be held to the cover 100 by the holding member 110 and these attached to the seat pan 8 together, so assembly work of the passenger protecting device 10C to the seat pan 8 is easy.

Also, with this arrangement, the bag 12 is held within the surrounding frame portion 102, so the bag 12 can be prevented from directly striking against or hanging on the seat pan 8 or the like at the time of mounting the integrally assembled bag 12 and cover 100 to the seat pan 8.

Further, with the passenger protecting device 10C, at time of normal use, the side perimeter of the bag 12 is surrounded by the surrounding frame portion 102, and the upper side is covered with the main plate portion 101, so damage due to abrasion or the like of the bag can be sufficiently prevented.

With this arrangement, the surrounding frame portion 102 is disposed within the recessed portion 20', preventing ill comfort in sitting due to the surrounding frame portion 102, and the bag 12 and gas generator 14A and the like therein jutting into the seat cushion.

Also, with this device, the recessed portion 20' is covered by the main plate portion 101, and further the edge portion 101a of the main plate portion 101 is fixed to the perimeter of the recessed portion 20' by rivets 105, preventing water (e.g., drinking water), trash, sand, and other like foreign material from entering the recessed portion 20', thereby preventing deterioration and damage of the bag 12 due to water, foreign material, and the like. Note that other fastening devices besides rivets 105, such as bolts or the like, may be used to fix the edge portion 101a to the seat pan 8.

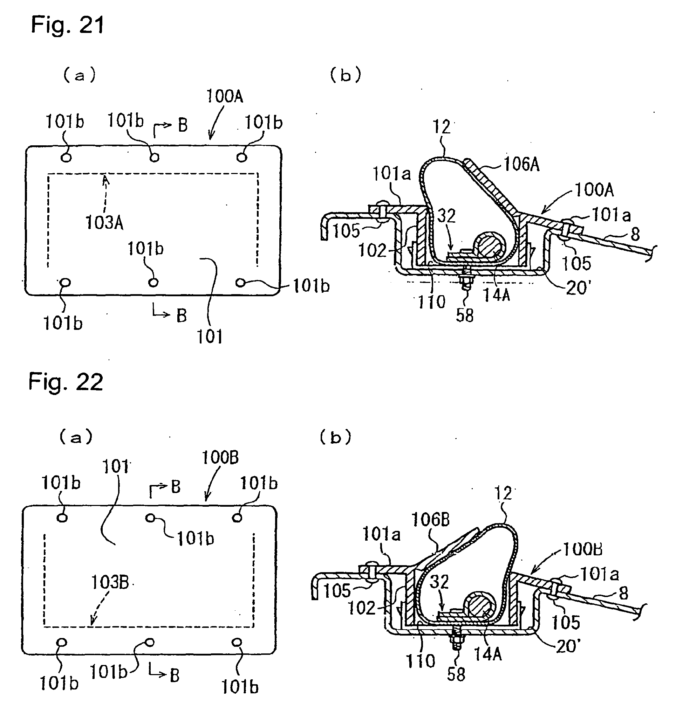

Fig. 21 through Fig. 23 are each explanatory diagrams of covers 100A, 100B, and 100C, according to different devices each, wherein (a) is a plan view of the cover, and (b) is a cross-sectional diagram along line B-B in (a). Note that (b) illustrates the bag inflated (the state wherein the main plate portion of the cover has torn open).

With the cover 100A in Fig. 21, a tear line 103A is provided on the lower face of the main plate portion 101, comprising a horizontal tear portion which extends in the horizontal direction along the base edge of the wall portion at the front side of the surrounding frame portion 102, and a left tear portion and right tear portion which each extend in the front-back direction along the base edges of the wall portions at the left and right sides of the surrounding frame portion 102, and connect to the left end and right end of the horizontal tear portion.

With the cover 100A, in the case of the bag 12 inflating, as shown in Fig. 21(b), the main plate portion 101 tears open following the horizontal tear portion at the front side and the left tear portion and right tear portion, so that the general entirety of the main plate portion 101 opens toward the back as a single flap 106A.

With the cover 100B in Fig. 22, a tear line 103B is provided on the lower face of the main plate portion 101, comprising a horizontal tear portion which extends in the horizontal direction along the base edge of the wall portion at the back side of the surrounding frame portion 102, and a left tear portion and right tear portion which each extend in the front-back direction along the base edges of the wall portions at the left and right sides of the surrounding frame portion 102, and connect to the left end and right end of the horizontal tear portion.

With the cover 100B, in the case of the bag 12 inflating, as shown in Fig. 22(b), the main plate portion 101 tears open following the horizontal tear portion at the back side and the left tear portion and right tear portion, so that the general entirety of the main plate portion 101 opens toward the front as a single flap 106B.

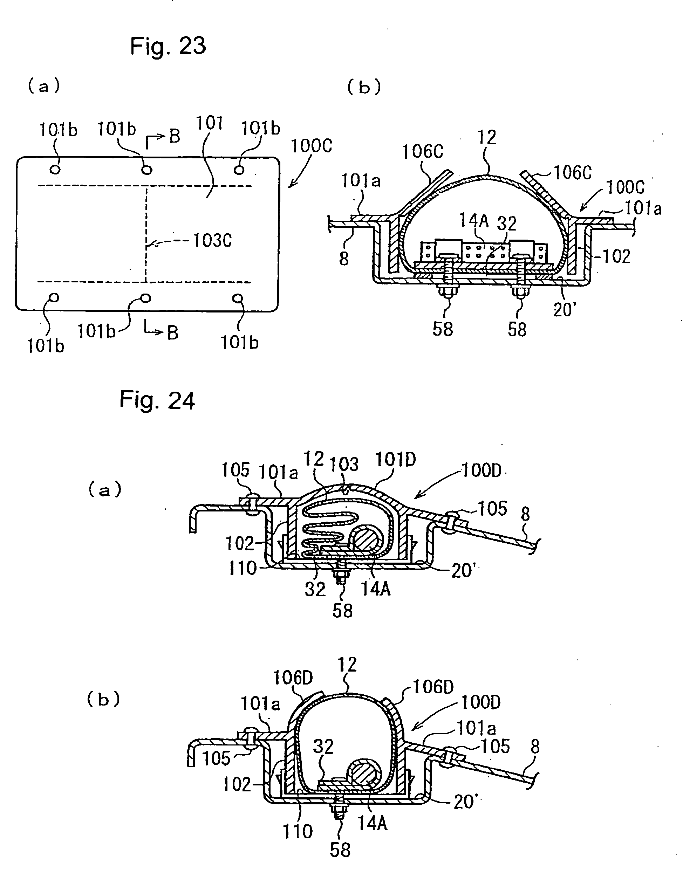

With the cover 100C in Fig. 23, a tear line 103C is provided on the lower face of the main plate portion 101, comprising two horizontal tear portions which extend in the horizontal direction along the base edges of the wall portions at the front and back sides of the surrounding frame portion 102, and a vertical tear portion which extends in the front-back direction so as to connect the horizontal tear portions at the middle portions thereof.

With the cover 100C, in the case of the bag 12 inflating, as shown in Fig. 23(b), the main plate portion 101 tears open following the horizontal tear portions at the front and back sides and the vertical tear portion, so that the main plate portion 101 opens toward the left and right as two flaps 106C and 106C.

Fig. 24 is a cross-sectional view of a cover 100D, wherein (a) illustrates a state wherein the bag is not inflated, and (b) illustrates a state wherein the bag is inflated (state wherein the main plate portion of the cover is torn open).

With the cover 100D, the main plate portion 101D is curved in a convex shape upwards so that around the center portion in the front and back direction is the highest position. Note that in this embodiment, a tear line 103 extending in the left and right directions is provided around the middle in the front and back direction.

With the cover 100D, in the case of the bag 12 inflating, the main plate portion 101 tears open following the tear line 103, so that the plate portion 101 opens toward the front and back as flaps 106D and 106D. As shown in Fig. 24(b), the flaps 106D and 106D are each curved so as to contour along the outer face of the bag 12, so a situation wherein the flaps 106D jut into the seat cushion and excessively press the seat cushion can be prevented.

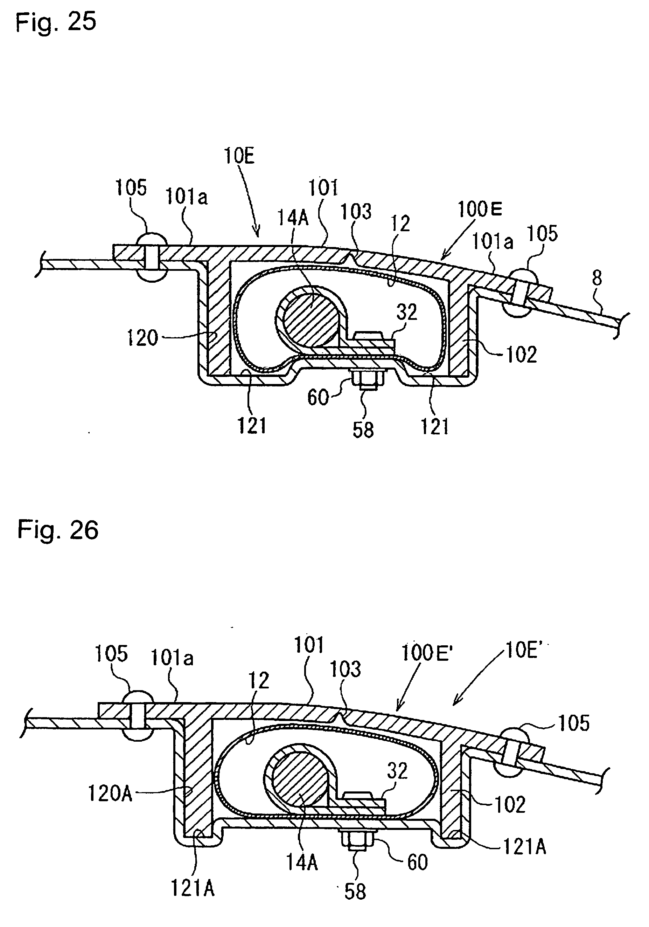

Fig. 25 illustrates a longitudinal-section view of a passenger protecting device 10E.

The passenger protecting device 10E also comprises a bag 12 long in the horizontal direction, which is folded up and placed on the seat pan, a gas generator 14A for inflating the bag 12, a fixing member 32 whereby the bag 12 and the gas generator 14A are each linked and fixed to the seat pan 8 by a stud bolt 58, and a cover 100E for covering the folded article of the bag 12. In this embodiment as well, the cover 100E comprises a main plate portion 101 disposed above the folded article of the bag 12, a surrounding frame portion 102 hanging down from the lower face of the main plate portion 101, and a tear line 103 for tearing open the main plate portion 101 at the time of the bag 12 inflating.

With this device as well, a recessed portion 120 is provided on the upper face of the seat pan 8 for placing the passenger protecting device, and the surrounding frame portion 102 is disposed within the recessed portion 120. Also, the edge portion 101a of the main plate portion 101 extends to the perimeter portion of this recessed portion 120, and overlaps the upper face of the seat pan 8, and is fastened by rivets 105.

With this device, a groove 121 is formed on the perimeter portion of the base of the recessed portion 120, with the lower end of the surrounding frame portion 102 intruding into this groove 121 over the entire circumference thereof.

Other configurations of the passenger protecting device 10E are the same as those of the above-described passenger protecting device 10C, and the same reference numerals indicate the same portions.

With this passenger protecting device 10E, the groove 121 is provided on the perimeter portion of the base of the recessed portion 120 where the surrounding frame portion 102 of the cover 100E intrudes, and the bottom end of the surrounding frame portion 102 is within the groove 121, so even in the event that water does flow in along the inner wall portion of the recessed portion 120, the water only collects in the groove 121, so the bag 12 can be prevented from getting wet from the water.

Also, as with a passenger protecting device 10E' shown in Fig. 26, providing a groove 121A on the perimeter portion of the base of the recessed portion 120A where the surrounding frame portion 102 of the cover 100E' intrudes so as to be capable of tightly engaging with the bottom end of the surrounding frame portion 102, can sufficiently prevent water from flowing into the recessed portion 121A.

Fig. 27(a) is a perspective view of a passenger protecting device according to an embodiment of the present invention, Fig. 27(b) is a cross-sectional view along line B-B in Fig. 27(a), and Fig. 27(c) is a cross-sectional view along the same portion as in Fig. 27(b) in the state wherein the bag has inflated.

In the present embodiment, the base frame 1A of the seat has a seat pan 8A which continuously extends in the front-back direction, from between the front portions of the left and right side frames la and 1b, to the back portions thereof. That is to say, with the present embodiment, the seat cushion (omitted from the drawings) is supported by a single seat pan 8A from the front end to the rear end. A passenger protecting device 10F is disposed below the rear portion of this seat pan 8A. With this embodiment, an opening 130 permitting the inflated bag 12 to pass through to the seat cushion side is provided at the front portion of the seat pan 8A.

With the present embodiment, the passenger protecting device 10F comprises a container-shaped retainer 140 which is opened at the upper face side, an inflatable bag 12 folded and stored within the retainer 140, an inflator (omitted from the drawings) for inflating the bag 12, and a cover 100F which closes off the upper face of the retainer 140. Note that the bag 12 may be formed into a module beforehand by being held by a holding member (omitted from the drawings) to the cover 100F.

The retainer 140 extends in the left and right directions so as to traverse the opening 130 in this embodiment, and both ends thereof are linked to the left and right side frames 1a and 1b by fixing devices such as bolts and nuts or the like (omitted from the drawings). The bag 12 extends in the left and right directions within this retainer 140.

Though not shown in the drawings, the inflator is disposed within the bag 12, and is fixed to the base of the retainer 140 through the lower portion of the bag 12. the cover 100F is configured so as to tear open upon being pressed by the bag 12 at the time of the bag 12 inflating.

With this passenger protecting device 10F, upon the bag 12 inflating, the bag 12 passes through the opening 130 while pressing the cover 100F open and expands out above the seat pan 8A, and presses the front portion of the seat cushion upwards.

With the present embodiment, the passenger protecting device 10F is disposed below the seat pan 8A, so the passenger protecting device 10F does not cause ill ease of comfort in sitting on the seat. Also, with this embodiment, the retainer 140 of the passenger protecting device 10F is disposed traversing the opening 130 of the seat pan 8A, and the cover 100F mounted to the retainer 140 closes off the opening 130 at least partially, thereby preventing the seat cushion from falling into the opening 130 upon the passenger sitting thereupon.

With this passenger protecting device 10F, the retainer 140 is fixed to the left and right side frames 1a and 1b, so even in the event that a great weight is placed on the inflated bag from the passenger, the bag 12 is securely supported by the retainer 140, so the passenger can be received by the inflated bag 12 in a sure manner.

Note that with the present embodiment, the left and right side ends of the retainer 140 are directly fixed to the left and right side frames 1a and 1b by fixing devices such as bolts or the like, but may be fixed by linking members such as brackets or the like (omitted from the drawings). Also, a retainer supporting member (omitted from the drawings) may be provided so as to bridge between the side frames 1a and 1b, with the retainer 140 mounted to this supporting member.

The retainer 140 may be fixed to other members (e.g., the seat pan 8A, etc.), besides the left and right side frames 1a and 1b.

Note that the above-described embodiment is only an example of the present invention, and the present invention is not restricted to any one of the above-described embodiments.

## Claims

1. A passenger protecting device for vehicle comprising:
an inflatable bag (12) disposed underneath the front portion of a seat cushion (9) of a seat base, for pushing up the lower face of the front portion of said seat cushion (9);
a gas generator for inflating said bag (12) in a case of emergency of a vehicle; and
a cover (100F) for covering said bag (12), which opens or expands due to the pressure of said bag (12) at the time of inflation of said bag (12),
**characterized in that** an opening (130) is provided in the seat pan (8A) below said seat cushion (9);
and that said bag (12) and said cover (100F) are disposed below said seat pan (8A), and are configured so as to pass through said opening (130) and wherein said bag (12) presses said seat cushion (9) from below at the time of inflating.

2. The passenger protecting device according to Claim 1, wherein said cover (100F) is disposed so as to block said opening (130) at least partially.

3. The passenger protecting device according to Claim 1, wherein said bag (12) is disposed within a retainer (140) formed in the shape of a box,
and wherein said cover (100F) is disposed so as to cover said retainer (140).

4. The passenger protecting device according to Claim 1, wherein said retainer (140) is fixed to at least the left and right frame portions (1a, 1b) of the seat.

5. The passenger protecting device according to any one of Claims 1 through 4, wherein said bag (12) extends in the width direction of the seat cushion;
and wherein a bag envelope is provided for surrounding said bag (12) at least partway along the longitudinal direction.

6. The passenger protecting device according to Claim 5, wherein the bag envelope surrounds only part of the bag (12) in the longitudinal direction.

7. The passenger protecting device according to Claim 5, wherein the bag envelope surrounds from close to the left end to close to the right end of the bag (12).

8. The passenger protecting device according to any one of Claims 5 through 7, wherein the circumference of the bag envelope is smaller than the circumference of the bag (12) in the inflated state.

9. The passenger protecting device according to any one of Claims 5 through 8, wherein said bag envelope (34') is linked to the seat pan (8).

10. The passenger protecting device according to Claim 1, wherein said bag (12) is held to said cover (100F) by a holding member.

## Patentansprüche

1. Insassen-Schutzvorrichtung für ein Fahrzeug, umfassend:
einen aufblasbaren Beutel (12), welcher unter dem vorderen Abschnitt eines Sitzkissens (9) einer Sitzbasis angeordnet ist, um die untere Fläche des vorderen Abschnitts des Sitzkissens (9) nach oben zu drücken;
einen Gaserzeuger, welcher den Beutel (12) im Falle eines Notfalls des Fahrzeugs aufbläst; und
eine Abdeckung (100F), um den Beutel (12), welcher aufgrund des Drucks des Beutels zur Zeit des Aufblasens des Beutels (12) sich öffnet oder erweitert, abzudecken **dadurch gekennzeichnet, dass** eine Öffnung (130) in einer Sitzschale (8A) unter dem Sitzkissen (9) vorgesehen ist;
und dass der Beutel (12) und die Abdeckung (100F) unter der Sitzschale (8A) angeordnet sind und sind so ausgestaltet sind, dass sie durch die Öffnung (130) verlaufen und wobei der Beutel (12) das Sitzkissen (9) von unten zur Zeit des Aufblasens drückt.

2. Insassen-Schutzvorrichtung nach Anspruch 1, wobei die Abdeckung (100F) so angeordnet ist, dass die Öffnung (130) zumindest teilweise versperrt ist.

3. Insassen-Schutzvorrichtung nach Anspruch 1, wobei der Beutel (12) innerhalb einer Halterung (140), welche in Form eines Kastens ausgebildet ist, angebracht ist, und wobei die Abdeckung (100F) so angeordnet ist, dass die Halterung (140) bedeckt wird.

4. Insassen-Schutzvorrichtung nach Anspruch 1, wobei die Halterung (140) zumindest an dem linken und rechten Randabschnitt (1a, 1b) des Sitzes befestigt ist.

5. Insassen-Schutzvorrichtung nach einem der Ansprüche 1 bis 4, wobei sich der Beutel (12) in Richtung der Breite des Sitzkissens (9) erstreckt;
und wobei eine Beutelhülle zum zumindest halbwegs Umschließen der Beutel (12) entlang der Längsrichtung vorgesehen ist.

6. Insassen-Schutzvorrichtung nach Anspruch 5, wobei die Beutelhülle nur einen Teil des Beutels (12) in der Längsrichtung umschließt.

7. Insassen-Schutzvorrichtung nach Anspruch 5, wobei die Beutelhülle von nahe dem linken Ende zu nahe dem rechten Ende den Beutel (12) umschließt.

8. Insassen-Schutzvorrichtung nach einem der Ansprüche 5-7, wobei der Umfang der Beutelhülle kleiner ist als der Umfang des Beutels (12) im aufgeblasenen Zustand.

9. Insassen-Schutzvorrichtung nach einem der Ansprüche 5-8. wobei die Beutelhülle (34') mit der Sitzschale (8) verbunden ist.

10. Insassen-Schutzvorrichtung nach Anspruch 1, wobei der Beutel (12) an der Abdeckung (100F) durch ein Halteelement gehalten ist.

## Revendications

1. Un dispositif de protection de passager pour véhicule comprenant :
un sac gonflable (12) disposé sous la partie avant d'un coussin de siège (9) d'une base de siège, pour pousser vers le haut la face inférieure de la partie avant dudit coussin de siège (9),
un générateur de gaz pour gonfler ledit sac (12) dans une situation d'urgence concernant un véhicule, et
un couvercle (100F) pour couvrir ledit sac (12), qui s'ouvre ou se dilate sous l'influence de la pression dudit sac (12) au moment du gonflage dudit sac (12),
**caractérisé en ce qu'**une ouverture (130) est prévue dans le fond de siège (8A) en dessous dudit coussin de siège (9),
et **en ce que** ledit sac (12) ainsi que ledit couvercle (100F) sont disposés en dessous dudit fond de siège (8A), et sont configurés de façon à traverser ladite ouverture (130) et dans lequel ledit sac (12) exerce une pression sur ledit coussin de siège (9) par le dessous au moment du gonflage.

2. Le dispositif de protection de passager selon la revendication 1, dans lequel ledit couvercle (100F) est agencé pour bloquer ladite ouverture (130) au moins partiellement.

3. Le dispositif de protection de passager selon la revendication 1, dans lequel ledit sac (12) est agencé à l'intérieur d'un organe de maintien (140) réalisé sous forme d'une boîte,
et dans lequel ledit couvercle (100F) est agencé de manière à recouvrir ledit organe de maintien (140).

4. Le dispositif de protection de passager selon la revendication 1, dans lequel ledit organe de maintien (140) est fixé au moins aux parties de cadre gauche et droite (1a, 1b) du siège.

5. Le dispositif de protection de passager selon l'une quelconque des revendications 1 à 4, dans lequel ledit sac (12) s'étend selon la direction de la largeur du coussin de siège,
et dans lequel une enveloppe de sac est prévue pour entourer ledit sac (12) au moins partiellement selon la direction longitudinale.

6. Le dispositif de protection de passager selon la revendication 5, dans lequel l'enveloppe de sac entoure seulement une partie du sac (12) selon la direction longitudinale.

7. Le dispositif de protection de passager selon la revendication 5, dans lequel l'enveloppe de sac entoure le sac (12) d'une position proche de l'extrémité gauche à une position proche de l'extrémité droite du sac.

8. Le dispositif de protection de passager selon l'une quelconque des revendications 5 à 7, dans lequel la circonférence de l'enveloppe de sac est inférieure à la circonférence du sac (12) à l'état gonflé.

9. Le dispositif de protection de passager selon l'une quelconque des revendications 5 à 8, dans lequel ladite enveloppe de sac (34') est reliée au fond de siège (8).

10. Le dispositif de protection de passager selon la revendication 1, dans lequel ledit sac (12) est retenu audit couvercle (100F) au moyen d'un organe de retenue.
